# EUROPEAN PATENT APPLICATION

(11) **EP 1 061 350 A1**
(43) Date of publication of application: **20.12.2000**
(21) Application number: 99111606.2
(22) Date of filing: 15.06.1999
(51) Int. Cl.: G01K 1/14

(54) **Temperature sensing assembly for enamel-coated components**

(71) Applicant: Pfaudler Werke GmbH, 68721 Schwetzingen (DE)
(72) Inventor: Trampert, Rainer, 68782 Brühl (DE)
(74) Representative: Popp, Eugen, Dr.

(57) **Abstract**

A temperature sensing assembly is provided for enamel-coated components such as a baffle or a mixing vessel. A sensor (20) includes a resistance wire (15) arranged on the surface of a substrate (15). The sensor (20) is embedded in the enamel coating (11, 12). The substrate (14) and the enamel coating (11, 12) have substantially the same thermal coefficient of expansion.

## Description

The present invention relates to a temperature sensing assembly for enamel-coated components such as mixing vessels, baffles, ports, stirring components, etc. The invention also relates to an enamel-coated components comprising the temperature sensing assembly.

In the chemical and pharmaceutical industries, processing vessels and associated components are often glass or enamel-coated due to the corrosive or abrasive nature of the ingredients involved. Operation control requires the determination of process parameters such as temperature or pressure and in addition provision must be made for taking samples of the medium being processed. This is usually accomplished with a tube-like baffle extending into the vessel from above.

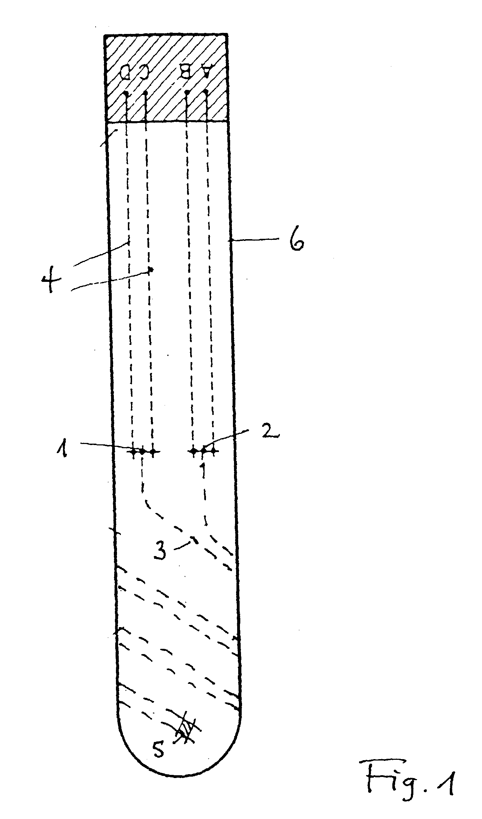

Fig. 1 shows a conventional elongate baffle equipped with a temperature sensing arrangement known in the art. The baffle is composed of a metal pipe 6 upon which a first glass coating is applied. The electrical connecting wires 4 as well as the resistance wires 3 are provided on the initial coating, whereafter a second enamel coating is applied. The platinum resistance wires 3 are wound about the end of the baffle and terminate at its lower end. A bridge 5 interconnects the resistance wires 3 and provides a resistance of about 100 ohms. The German Patent DE 2 123 371 discloses a conventional temperature sensing arrangement of this type.

In the conventional sensing assembly, the platinum wires of the resistance winding are adhered to the enamel coating. Poor adhesion of the band-shaped platinum wires, if it occurs, can lead to defects and even plating off of the enamel coating. In addition, the platinum wire is relatively expensive and additional time and effort is required in producing the wire winding on the baffle.

In the conventional arrangement as shown in Fig. 1, the axial extension of the resistance wire winding on the baffle is usually about 10 to 12 cm. All of the winding must be immersed in the processed product to obtain an accurate temperature measurement. During charging and discharging of the reactor vessel, part of the winding may be exposed.

An object of the present invention is to provide a temperature sensing assembly by which deterioration of the enamel coating caused by poor adhesion to the resistance wires is avoided. A further object is to provide an assembly by which the amount of platinum employed can be greatly reduced. Yet another object of the invention is to provide an assembly by which the temperature can be measured reliably even when charging or discharging the mixing vessel.

According to the present invention, a temperature sensing assembly for enamel-coated components is provided as defined in Claim 1. In addition, the invention provides enamel-coated components, which employ the temperature sensing assembly. A sensor is provided which includes a resistance wire arranged on the surface of a substrate, the sensor being embedded in the enamel coating of the particular component. The substrate is provided of a material having a thermal expansion coefficient which is about the same as that of the enamel coating.

The sensor including the resistance wire and the substrate are preferably covered with a glass layer before assembly. The sensor is then placed in a recess provided in a base layer of the enamel coating. The sensor and the base layer are then coated with a second cover layer of enamel, whereby the glass layer on the sensor is allowed to melt and fuse with the surrounding enamel coating.

The substrate is preferably composed of a ceramic material, most preferably based on aluminium oxide (Al₂O₃). A modified Al₂O₃ ceramic is particularly preferred. Such ceramic materials have a thermal expansion coefficient of about 0.9 x 10⁻⁶. This value for the substrate is about the same as that for the enamel and the platinum, which is used for the resistance wire on the substrate. With a similar expansion coefficient, the integrity of the enamel coating where the sensor is embedded is maintained without deterioration of the coating.

The resistance wire employed in the present invention is preferably of small dimension, which allows the resistance loop or circuit to be assembled in the enamel coating at a localised position. Such small dimensioned resistance loops allow the amount of platinum to be considerably reduced, up to about 90%. Moreover, it is possible to position the sensor at the lower end of the baffle to ensure that the sensor is always in contact with the medium whose temperature is to be measured.

The compact form of the sensor also simplifies placement on other components, such as a sample-taking device, on the vessel wall or on the stirring mechanism in a mixing vessel.

Further objects and advantages of the present invention will become apparent in the following description of embodiments taken in conjunction with the drawings, in which
Fig. 1 illustrates a conventional temperature sensing assembly disposed on a baffle;
Fig. 2 gives a schematic representation of an embodiment of the present temperature sensing assembly; and
Fig. 3 shows an enlarged view of the temperature sensor of Fig. 2 embedded in layers of enamel.

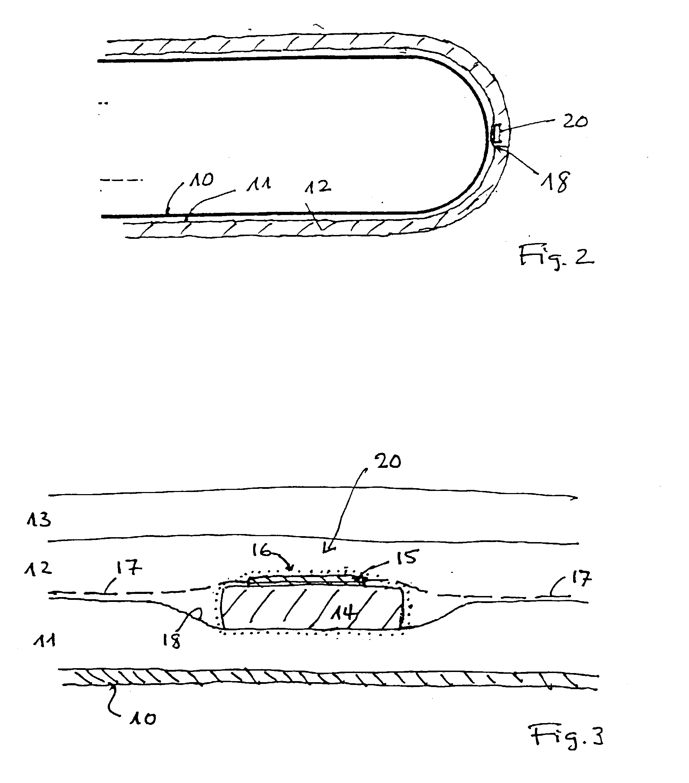

In the embodiment of Fig. 2, the sensor 20 is provided at the tip end of a tubular baffle 10. The present invention however is not limited to this embodiment, but can be employed in other enamel-coated components such as a vessel wall, sample-taking tubes, flow disruption baffles or stirring mechanisms. As shown in Fig. 2, the steel mantle of the tubular baffle is coated with a base layer 11 of enamel, where a recess 18 is formed in the base layer. The sensor 20 is disposed in the recess 18, whereafter a second cover layer 12 of enamel is applied.

Fig. 3 illustrates the assembly with the sensor element 20 in more detail. The sensor 20 in this embodiment comprises the resistance wire 15 disposed on a surface of a substrate 14. The resistance wire 15 is preferably of the miniaturised type which is commercially available, for example, the FX series of Heraeus GmbH. The small dimension sensor comprises band-shaped platinum wires formed with thin film techniques. Such resistor circuits have side dimensions of 1 to 2 cm and a thickness of 1 to 2 mm. Moreover, such resistor circuits have no hysteresis distortion in a temperature range of -190° to +500° C. Such circuits are available with a resistance rating of about 100 ohms.

In the present embodiment, the small dimension resistance wire or circuit 15 is provided on the substrate 14 and the assembly is then encapsulated in a glass layer 16 (indicated in Fig. 3 by the dotted line).

The preparation of a component having the temperature sensing assembly of the present invention will now be discussed in conjunction with Fig. 3. The component 10 is a steel support upon which a first base layer 11 of enamel is applied. A recess 18 is provided in the base layer for reception of the sensor 20. When the base layer has been allowed to cool, the sensor 20 is placed in the recess and the electrical connection lines 17 are disposed on the outer surface of the base layer. These connection lines 17 will normally be provided for a four pole connection as illustrated in the conventional arrangement in Fig. 1. With this bridge circuit connection, the resistance measurement can be performed in a manner such that the resistance of the connection wires 17 become negligible.

With the sensor 20 and the connection wires 17 in place, a second cover layer 12 of enamel is applied. The enamelling temperature of about 800° C causes the glass coating 16 on the sensor 20 to at least partially melt and fuse with the cover layer 12. In addition, the enamelling process causes the substrate 14 as well as the base enamel layer 11 to heat, such that a fused connection also is achieved between the substrate 14 and the base layer 11.

Having formed the cover layer 12, the electrical connection wires 17 are embedded between the two layers. In addition the substrate 14 with the resistance wires 15 are firmly secured in the two layer structure. As illustrated in Fig. 3, a final protective enamel layer 13 or even additional protective layers can also be applied to the cover layer 12.

As mentioned above, the substrate 14 comprises a ceramic material, preferably a modified Al₂O₃ ceramic. Such ceramics have a coefficient of thermal expansion of about 0.9 x 10⁻⁶, which is approximately equal to that of platinum as well as to that of the enamel. Thus it will be apparent that during the enamel coating procedure where temperatures of 800° to 900° C are reached, the platinum wires as well as the substrate will heat and expand at approximately the same rate as the base layer 11. Furthermore, in the finished assembly, the enamel coating will often be subjected to operational temperatures of 200° to 300°C. As will be apparent from Fig. 3, with the similar coefficient of thermal expansion, the platinum wires, the substrate and the enamel coating will all expand and contract during heating and cooling so as not to induce material stress between the elements. As a result, the material integrity of the coating as well as that of the platinum wires is maintained.

## Claims

1. Temperature sensing assembly for enamel-coated components, comprising a sensor (20) including a resistance wire (14) arranged on the surface of a substrate (15), the senor (20) being embedded in the enamel coating (11, 12) and the substrate (14) having a thermal expansion coefficient about the same as the enamel coating (11, 12).

2. The temperature sensing assembly of Claim 1, wherein the sensor (20) including the resistance wire (15) and the substrate (14) are covered by a glass layer (16), the glass layer (16) being melt fused with the surrounding enamel coating (11, 12).

3. The temperature sensing assembly of Claims 1 or 2, wherein the sensor (20) is arranged in a recess (18) in a base layer (11) of the enamel coating, the base layer (11) and the sensor (20) being covered by a cover layer (12) of the enamel coating (11, 12).

4. The temperature sensing assembly of Claim 3, wherein electrical connection wires (17) to the sensor (20) are embedded between the base layer (11) and the cover layer (12) of the enamel coating.

5. The temperature sensing assembly of any one of the Claims 1 to 4, wherein the substrate is a modified Al₂O₃ ceramic material.

6. An enamel-coated component having the temperature sensing assembly of any one of the Claims 1 to 5, the compenent preferably being a vessel wall, a baffle, a sample-taking device or a stirring mechanism.

7. The enamel-coated component of Claim 6, comprising an elongated baffle to be vertically disposed in a vessel, the temperature sensing assembly being disposed on its lower end.
